# EUROPEAN PATENT APPLICATION

(11) **EP 4 345 759 A1**
(43) Date of publication of application: **03.04.2024**
(21) Application number: 22198920.5
(22) Date of filing: 30.09.2022
(51) Int. Cl.: G06T 17/20

(54) **GENERATION OF ADAPTED MESH REPRESENTATION FOR A SCENE**

(71) Applicant: Koninklijke Philips N.V., 5656 AG Eindhoven (NL)
(72) Inventor: VAN GEEST, Bartholomeus Wilhelmus Damianus, Eindhoven (NL); KROON, Bart, Eindhoven (NL)
(74) Representative: Philips Intellectual Property & Standards

(57) **Abstract**

An apparatus for generating a mesh representation for a scene comprises a receiver (201) receiving a data signal comprising: image data representing the scene, spatial data indicative of spatial properties of the scene, and mesh division cues indicative of properties of mesh primitive divisions for different parts of the scene. A mesh generator (203) provides an initial coarse three dimensional mesh for the scene where the mesh is formed by a plurality of primitives having vertices interconnected by edges. The positions of the vertices are dependent on the spatial data. A divider (205) then generates a modified three dimensional mesh by dividing primitives where the division is dependent on the mesh division cues. A view synthesizer may in some cases generate images based on the modified three dimensional mesh.

## Description

### FIELD OF THE INVENTION

The invention relates to generation of a mesh representation for a scene, and in particular, but not exclusively, to generation of a mesh representation suitable for use in synthesis of viewpoint images for different viewpoints.

### BACKGROUND OF THE INVENTION

Image, video, and graphic applications based on three-dimensional scenes have become prevalent in many applications such as specifically computer graphic applications.

For example, one service being increasingly popular is the provision of image sequences in such a way that the viewer is able to actively and dynamically interact with the system to change parameters of the rendering. A very appealing feature in many applications is the ability to change the effective viewing position and viewing direction of the viewer, such as for example allowing the viewer to move and look around in the scene being presented.

An example of a video service or application that has been proposed is immersive video where video is played-back on e.g. a VR headset to provide a three-dimensional experience. For immersive video, the viewer has freedom to look and move around in the presented scene such that this may be perceived as being viewed from different viewpoints. However, in many typical approaches, the amount of movement is limited, e.g. to a relatively small area around a nominal viewpoint which may typically correspond to a viewpoint from which the video capture of the scene has been performed. In such applications, three dimensional scene information is often provided that allows high quality view image synthesis for viewpoints that are relatively close to the reference viewpoint(s) but which deteriorates if the viewpoint deviates too much from the reference viewpoints.

Immersive video may also be referred to as 6-degrees-of-freedom (6DoF) or 3DoF+ video. ISO/IEC 23090-12 MPEG immersive video (MIV) is an emerging standard where meta-data is used on top of existing video codecs to enable and standardize immersive video.

In order to support fast three-dimensional graphics processing, a number of standards and specifications have been developed. This not only provides faster design and implementation as it may provide standardized functions and routines for many standard operations, such as viewpoint shifting, but also allows for dedicated hardware graphic engines to be developed and optimized for these routines. Indeed, for many computers, the Graphic Processing Unit (GPU) may nowadays often be at least as powerful and important as the Central Processing Unit (CPU).

An example of a standard for supporting fast graphics processing is the OpenGL specification which provides an Application Programming Interface (API) with a number of functions supporting graphics processing. The specification is typically used to provide hardware accelerated graphics processing with the specific routines being implemented by dedicated accelerated hardware in the form of a GPU.

In most such graphic specifications, the representation of the scene is by a combination of multiple texture maps with associated three-dimensional meshes. Indeed, a particularly effective approach in many scenarios is to represent image objects, or indeed the scene as a whole, by a polygon mesh where a set of polygons are connected by their common edges or corners (vertices), which are given by three-dimensional positions. The combined three-dimensional polygon mesh accordingly provides an effective model of three-dimensional objects, including possibly a three-dimensional description of an entire image. The polygon mesh is often a triangle mesh formed by triangles having common corners given in 3D space.

As an example, a stereo camera may record an image of a scene from a given viewpoint. For each pixel, a disparity estimation may be performed to estimate the distance to the object represented by the pixel. This may be performed for each pixel thereby providing a three-dimensional position of x,y,z for each pixel. These positions may then be used as vertices for a triangle (or other primitive) mesh with two triangles being formed for each group of 2x2 pixels. As this may result in a large number of triangles, the process may include combining some initial triangles into larger triangles (or in some scenarios more generally into larger polygons). This will reduce the number of triangles but also decrease the spatial resolution of the mesh. Accordingly, it is typically dependent on the depth variations and predominantly done in flatter areas.

Each vertex is further associated with a light intensity value of the texture map. The texture map essentially provides the light/color intensity in the scene for the object at the pixel position for the vertex. Typically, a light intensity image/ texture map is provided together with the mesh with each vertex containing data representing the x, y, z position of the vertex and u,v data identifying a linked position in the texture map, i.e. it points to the light intensity at the x, y, z position as captured in the texture map.

In such representations, the polygon mesh is used to provide information of the three-dimensional geometry of the objects whereas the texture is typically provided as a separate data structure. Specifically, the texture is often provided as a separate two-dimensional map which by the processing algorithm can be overlaid on the three-dimensional geometry.

The use of meshes is particularly suitable for processing and manipulation by computer graphics algorithms, and many efficient software and hardware solutions have been developed and are available in the market. A substantial computational efficiency is in many of the systems achieved by the algorithm processing the individual vertices commonly for a plurality of polygons rather than processing each polygon separately. For example, for a typical triangle mesh, the individual vertex is often common to several (often 3-8) triangles. The processing of a single vertex may accordingly be applicable to a relatively high number of triangles thereby substantially reducing the number of points in an image or other object that is being processed.

As a specific example, many current Systems on Chip (SoCs) contain a GPU which is highly optimized for processing of 3D graphics. For instance, the processing of 3D object geometry and 3D object texture is done using two largely separate paths in the so called OpenGL rendering pipeline (or in many other APIs such as DirectX). The hardware of GPUs on SoCs can deal efficiently with 3D graphics as long as the 3D source is presented to the GPU in the form of vertices (typically of triangles) and textures. The OpenGL application interface then allows setting and control of a virtual perspective camera that determines how 3D objects appear as projected on the 2D screen. Although OpenGL uses 3D objects as input, the output is typically a 2D image suitable for a normal 2D display.

However, such approaches require the three-dimensional information to be provided by a polygon mesh and associated texture information.

In order to achieve high quality graphics processing, such as image synthesis from different view poses, a high quality mesh is required. In particular, a mesh that closely follows the contours, irregularities, and depth transitions in the scene is desired. In order for such an accurate mesh to be generated, it is typically required that the polygons/ primitives that form the mesh are sufficiently small, which tends to result in meshes with a large number of primitives.

However, such large meshes tend be very demanding in terms of computational resources required for processing. Further, the representation of such large meshes tend to require a large amount of data. This may be particularly disadvantageous for scenarios where depth information is communicated via a resource limited network or connection.

Thus, a critical factor for many graphic systems is the trade-off between quality and operational constraints and requirements, and current approaches tend to provide suboptimal performance and trade-off.

The issue is particularly exacerbated as the preferred trade-off will tend to vary for different situations and scenarios. The processing and adaptation of a mesh tends to be computationally intensive. It may furthermore be complicated in many end devices by the available information being limited, and in particular by it being limited only to specific scene depth information provided from a remote end.

Hence, an improved approach for mesh processing would be advantageous. In particular, an approach that allows improved operation, increased flexibility, an improved mesh adaptation, improved trade-off between quality/ accuracy and detail/ denseness of the mesh, reduced complexity, facilitated implementation, increased perceived synthesized image quality for view synthesis based on the mesh, improved adaptability, reduced memory and/or storage requirements, and/or improved performance and/or operation would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus for generating a mesh representation for a scene, the apparatus comprises: a receiver arranged to receive a data signal comprising: image data representing the scene, spatial data indicative of spatial properties of the scene, and mesh division cues indicative of properties of mesh primitive divisions for different parts of the scene; a mesh generator arranged to provide a first three dimensional mesh for the scene, the first three dimensional mesh being formed by a plurality of primitives having vertices interconnected by edges, positions of vertices of the plurality of primitives being dependent on the spatial data; a divider arranged to generate a modified three dimensional mesh by dividing primitives of the plurality of primitives, the division being dependent on the mesh division cues.

The approach may allow an improved mesh to be generated in many scenarios. In particular, an improved adaptation of primitives (and in particular the density, size and/or number of primitives) may be achieved. For example, it may allow a finer mesh to be generated for critical areas than for non-critical areas. The approach may for example allow encoder/ generator side guidance of a mesh being generated at the decoder/ synthesizer side. This may allow substantially improved meshes in many embodiments as the encoder/ generator side may often have additional information and/or be less resource constrained. The approach may be particularly suitable for use in resource restricted devices, such as many mobile devices. It may often allow real-time operation for such devices.

The approach may in many embodiments provide an improved trade-off between quality/ accuracy and detail/ denseness of the mesh, and thus between quality/ accuracy and performance/ quality/ computational resource. In many scenarios, e.g. an improved image can be synthesized for different view poses using the modified 3D mesh.

In many scenarios, a reduced communication rate and/or data storage size can be achieved. For example, the presence of mesh division cues may in many scenarios allow less detailed spatial data to be communicated resulting in an overall reduced data rate/ size.

The mesh division cues may indicate different properties of mesh primitive divisions for different parts of the scene. Different parts of the scene may in some embodiments correspond directly to different parts of a depth map or mesh of the spatial data and/or to different parts of the image. The property of a mesh primitive division may be a degree/ level/ extent of a division of a primitive.

The image data may e.g. be or comprise one or more view images and/or one or more texture images/ maps. The spatial data may typically comprise at least one of depth data and/or a mesh data and/or a depth map and/or data indicating a constructive solid geometry/ computational binary solid geometry and/or a volumetric representation for the scene/image data.

Primitives may typically be polygons, such as specifically rectangles or triangles.

Divisions of primitives into smaller primitives may often also be referred to as tessellation. The mesh division cues may also be referred to as tessellation cues.

The mesh division cues may be at a lower resolution than e.g. a depth map of the spatial data. The spatial properties of the scene may be geometric properties of the scene.

This may provide improved operation and/ facilitated implementation in many embodiments.

In many embodiments, the apparatus may comprise a view synthesizer arranged to generate view images from the modified 3D mesh and the image data.

According to an optional feature of the invention, at least one cue of the mesh division cues indicates a number of divisions of at least one of a primitive and an edge of a primitive of the plurality of primitives.

This may provide improved operation and/ facilitated implementation in many embodiments.

According to an optional feature of the invention, at least one cue of the mesh division cues indicates a dependency of a number of divisions of at least one of a primitive and an edge of a primitive on a depth property of the primitive.

This may provide improved operation and/ facilitated implementation in many embodiments.

The depth property may specifically be a depth difference between (at least some) vertices of the primitive.

According to an optional feature of the invention, at least one cue of the mesh division cues indicates a dependency of a number of divisions of an edge of a primitive of the plurality of primitives on at least one parameter from the group of: a color property of the image; a texture property of the image; a transparency property of the image; and a saliency property of the image.

This may provide improved operation and/ facilitated implementation in many embodiments. It may in particular in many scenarios provide an improved adaptation of the modified three dimensional mesh to the scene.

According to an optional feature of the invention, the spatial data comprises a depth map for the scene.

According to an optional feature of the invention, the spatial data is encoded in a luminance channel of a color image encoding and the mesh division cues are comprised in at least one chrominance channel of the color image encoding.

This may provide improved operation and/ facilitated implementation in many embodiments.

The approach may in particular allow an encoding where mesh division cues can be provided while using an existing legacy data format. The approach may allow improved encoding and/or improved backwards compatibility.

According to an optional feature of the invention, the spatial data comprises data describing a three dimensional mesh.

This may provide improved operation and/ facilitated implementation in many embodiments.

In some embodiments, the first three dimensional mesh may be the three dimensional mesh described by the spatial data.

According to an optional feature of the invention, the apparatus comprises a graphics pipeline arranged to synthesize images from different view positions from the received data stream, the graphics pipeline being arranged to synthesize the images using the modified three dimensional mesh, and wherein the divider is part of the graphics pipeline.

This may provide improved operation and/ facilitated implementation in many embodiments. It may in particular in many scenarios allow a particularly efficient and/or fast processing and may in many scenarios allow existing dedicated video graphics hardware to be used directly. The graphics pipeline may specifically be an OpenGL, Vulkan, WebGL, Metal or DirectX graphics pipeline.

According to an optional feature of the invention, at least some cues of the mesh division cues provide indications of properties of mesh primitive divisions in at least two different directions.

This may provide improved operation and/ facilitated implementation in many embodiments. It may in particular in many scenarios allow a more flexible and/or accurate adaptation of the modified three dimensional mesh to the scene properties.

According to an optional feature of the invention, at least some cues of the mesh division cues provide indications of a degree of anisotropy of division in the two different directions.

This may provide improved operation and/ facilitated implementation in many embodiments. It may in particular in many scenarios allow a more flexible and/or accurate adaptation of the modified three dimensional mesh to the scene properties.

According to an optional feature of the invention, mesh division cues are only provided for a part of the scene and the divider is arranged to generate the modified three dimensional mesh by using a nominal subdivision property for primitives of the plurality of primitives for which no mesh division cues are provided.

This may provide improved operation and/ facilitated implementation in many embodiments.

According to an aspect of the invention there is provided an apparatus for generating a data signal, the apparatus comprising: a receiver arranged to receive image data representing a scene; a receiver arranged to receive spatial data indicative of spatial properties of the scene; and a processor arranged to provide mesh division cues indicative of properties of mesh primitive divisions for different parts of the scene; and a data stream generator arranged to generate the data signal to include encoded data representing the image data, the spatial data, and the mesh division cues.

According to an aspect of the invention there is provided a method of generating a mesh representation for a scene, the method comprising: receiving a data stream comprising: image data representing the scene, spatial data indicative of spatial properties of the scene, and mesh division cues indicative of properties of mesh primitive divisions for different parts of the scene; providing a first three dimensional mesh for the image, the first three dimensional mesh being formed by a plurality of primitives having vertices interconnected by edges, positions of vertices of the plurality of primitives being dependent on the spatial data; and generating a modified three dimensional mesh by dividing primitives of the plurality of primitives, the division being dependent on the mesh division cues.

According to an aspect of the invention there is provided a method of generating a data signal, the method comprising: receiving image data representing a scene; receiving spatial data indicative of spatial properties of the scene; and providing mesh division cues indicative of properties of mesh primitive divisions for different parts of the scene; and generating the data signal to include encoded data representing the image data, the spatial data, and the mesh division cues.

According to an aspect of the invention there is provided a data signal comprising: image data representing a scene; spatial data indicative of spatial properties of the scene; and data representing mesh division cues indicative of properties of mesh primitive divisions for different parts of the scene.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a video distribution system in accordance with some embodiments of the invention;
FIG. 2 illustrates an example of an image synthesizer apparatus in accordance with some embodiments of the invention;
FIG. 3 illustrates an example of a signal generator apparatus in accordance with some embodiments of the invention;
FIG. 4 illustrates an example of a tessellation of a 3D mesh in accordance with some embodiments of the invention;
FIG. 5 illustrates an example of depth properties for a scene;
FIG. 6 illustrates some elements of a possible arrangement of a processor for implementing elements of audio apparatus in accordance with some embodiments of the invention.

### DETAILED DESCRIPTION OF THE EMBODIMENTS

The following description will focus on an immersive video application, but it will be appreciated that the described principles and concepts may be used in many other applications and embodiments.

In many approaches, the immersive video may be provided locally to a viewer by e.g. a stand-alone device that does not use, or even have any access to, any remote video server. However, in other applications, an immersive application may be based on data received from a remote or central server. For example, video data may be provided to a video rendering device from a remote central server and may be locally processed to generate a desired immersive video experience.

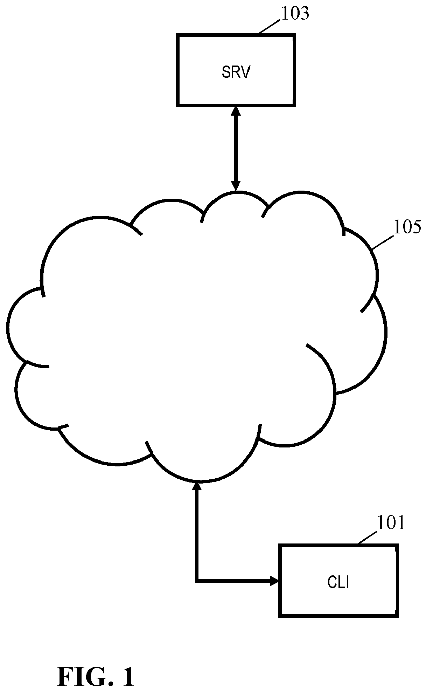

FIG. 1 illustrates such an example of an immersive video system in which a video rendering device 101 liaises with a remove immersive video server 103 e.g. via a network 105, such as the Internet. The server 103 may be arranged to simultaneously support a potentially large number of client video rendering devices 101.

The immersive video server 103 may for example support an immersive video experience by transmitting three dimensional video data describing a real world scene. The data may specifically describe visual features and geometric properties of the scene which is generated from a real time capture of the real world by a set of (possibly 3D) cameras.

The 3D video data may e.g. be a video stream and includes one or more images that represent visual properties of the scene. It further includes spatial data indicative of spatial properties of the scene. Specifically, the video stream may comprise viewpoint images and associated depth maps (Multi View and Depth, MVD, data), or may e.g. comprise 3D meshes and associated texture images/ maps.

The immersive video rendering device 101 is arranged to receive and process the received 3D video data to generate an output video stream that dynamically reflects changes in the user pose thereby providing an immersive video experience where the presented view adapts to viewing/ user pose/placement changes.

In the field, the terms placement and pose are used as a common term for position and/or direction/orientation. The combination of the position and direction/ orientation of e.g., an object, a camera, a head, or a view may be referred to as a pose or placement. Thus, a placement or pose indication may comprise six values/components/ degrees of freedom with each value/component typically describing an individual property of the position/ location or the orientation/ direction of the corresponding object. Of course, in many situations, a placement or pose may be considered or represented with fewer components, for example if one or more components is considered fixed or irrelevant (e.g. if all objects are considered to be at the same height and have a horizontal orientation, four components may provide a full representation of the pose of an object). In the following, the term pose is used to refer to a position and/or orientation which may be represented by one to six values (corresponding to the maximum possible degrees of freedom). The term pose may be replaced by the term placement. The term pose may be replaced by the term position and/or orientation. The term pose may be replaced by the term position and orientation (if the pose provides information of both position and orientation), by the term position (if the pose provides information of (possibly only) position, or by orientation (if the pose provides information of (possibly only) orientation.

The quality of the generated view images will depend on the images and depth information that is available to the view synthesis operation. It further depends on the amount of reprojection and view shifting that is required.

In particular, many algorithms processing or evaluating spatial properties of a scene are based on evaluating a three dimensional (3D) mesh of the scene (or part thereof). Such an approach is for example widely used in computer graphics processing, and in particular in graphics pipelines. Such pipelines are developed for the specific purpose of generating view images for different view poses based on image data and spatial data in the form of 3D meshes.

Such processes tend to be highly dependent on the accuracy and quality of the 3D mesh employed. An accurate and detailed mesh with many small polygons may provide more accurate information but also tends to be resource demanding to process. In many practical cases, this may prevent e.g. high quality image synthesis on relatively low resource devices (e.g. small mobile devices) to achieve real time operation.

In the following an approach will be described which may provide improved performance in many scenarios. It may typically allow an improved adaptation of a 3D mesh to be suitable for specific applications.

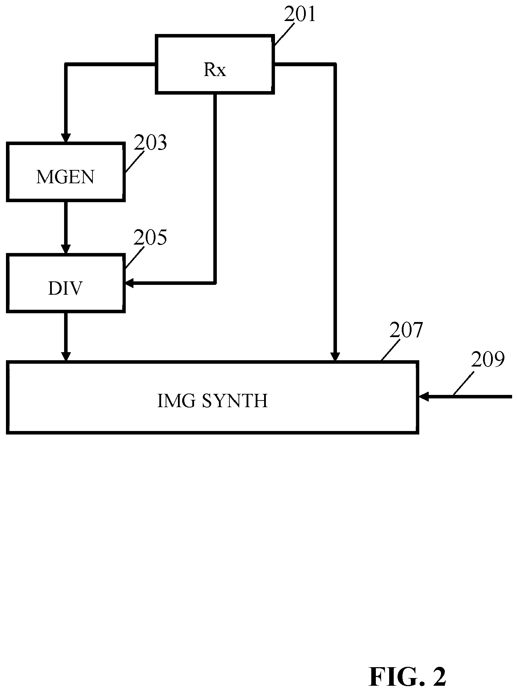

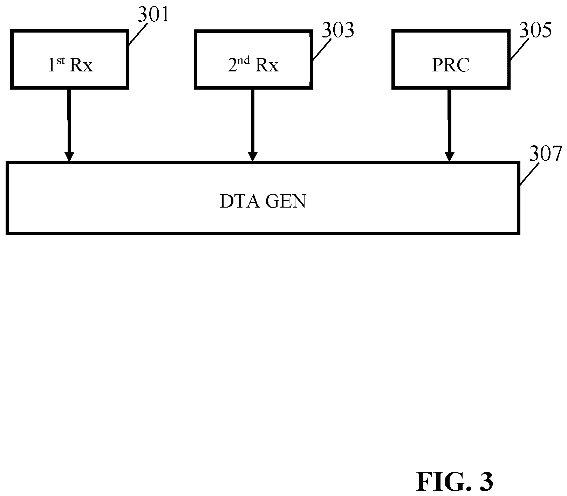

The approach will be described in more detail with reference to FIG. 2 which illustrates elements of an exemplary apparatus for synthesizing images from a data signal and FIG. 3 which illustrates elements of an exemplary apparatus for generating a data signal for the apparatus of FIG. 2. The apparatus of FIG. 2 may specifically be considered to represent elements of the client video rendering device 101 of FIG. 1 and the apparatus of FIG. 3 may specifically be considered to represent elements of the immersive video server 103.

The apparatus of FIG. 2, which henceforth will also be referred to as a synthesizer apparatus, comprises a receiver 201 which is arranged to receive a data signal from the apparatus of FIG. 3, which will henceforth also be referred to as a signal generator apparatus.

The receiver 201 is arranged to receive a data signal which comprises image data that represents the scene, and specifically visual properties of the scene. In many embodiments, the image data may include data providing one or more view images of the scene for a given time instant. The view images are typically from different poses and may specifically provide a multi view image for the scene at a given time instant. For a video application, it will be appreciated that such images will be provided for a sequence of time instants, and that specifically the described images may correspond to a single frame of the video sequence. For brevity, the following description will focus on the generation and processing for a single image/frame but it will be appreciated that the described approach can be extended to multiple, and typically all, frames of a video sequence.

The receiver 201 further receives spatial data that is indicative of spatial properties of the scene, and specifically of the spatial geometry of the scene. In many embodiments, the spatial data may include depth data indicative of depth/ distances from one or more view poses. Specifically, the spatial data may include one or more depth maps from one or more view poses, and specifically a depth map may be provided for each view pose for which a view image is provided.

Alternatively or additionally, the spatial data may include a 3D mesh for one or more view poses. In many embodiments, the spatial data includes only a single 3D mesh providing a mesh description of the scene from a single view pose. In some embodiments, a 3D mesh describing the scene as a model that is independent of specific view poses may be provided.

In many embodiments, the image data may alternatively or additionally comprise one or more texture maps/ images. For example, the spatial data may include a 3D mesh and the image data may include a texture map for the 3D mesh. Thus, instead of (or in some cases as well as) the image data including view images (from specific poses), the image data may include one or more texture maps/ images for a 3D mesh.

Thus, in many embodiments the receiver 201 may receive data providing an image + depth representation of the scene, or may e.g. receive a mesh+texture representation of the scene.

The receiver is coupled to a mesh generator 203 which is arranged to provide a first/ initial 3D mesh for the scene. The first/initial 3D mesh is typically a coarse mesh formed by a plurality of primitives that have vertices interconnected by edges. The primitives may typically be polygons, such as specifically rectangles or triangles. The following description will focus on the primitives being triangles but it will be appreciated that the described principles are not limited to this specific example.

The positions of vertices for the primitives are dependent on the spatial data. Indeed, in examples where the spatial data comprises a 3D mesh for the scene, the mesh generator 203 may generate the first 3D mesh simply by copying a received 3D mesh. Thus, in some embodiments, a 3D mesh received as part of the data signal may be used directly as an initial mesh.

In other embodiments, the initial 3D mesh may be derived from a received 3D mesh. For example, if a detailed 3D mesh is received, the mesh generator 203 may proceed to generate a coarse initial 3D mesh by subsampling the vertices of the received 3D mesh, i.e. larger primitives may be formed by selecting a subset of vertices and forming primitives between these.

In some embodiments, the initial 3D mesh may be generated from one or more received depth maps. For example, vertices may be generated by subsampling the depth map, such as e.g. generating a vertex for every, say, 10^{th} depth map pixel. A 3D position for the vertex may be generated from the depth value of the pixel (and a projection from the view pose). The initial 3D mesh may then be generated by primitives between the vertices.

As another example, the mesh may be generated from a volumetric representation such as a point cloud, or an octree representation.

As yet another example, the mesh may be generated from a dense light field representation such as generated from a plenoptic camera.

A 3D mesh/ 3D mesh model may provide a three dimensional description of at least part of the scene. The 3D mesh may be comprised of a set of vertices interconnected by edges generating faces. The 3D mesh may provide a large number of e.g. triangle or rectangular faces providing a three dimensional representation of elements of the scene. Typically, the mesh is e.g. described by the three dimensional positions of the vertices.

In many embodiments, the data signal may as mentioned further include texture data and texture information for the mesh. Such texture data may indicate a texture for faces of the mesh. In many embodiments, the image data may comprise at least one texture image having pixel values linked to vertices of the 3D mesh.

A 3D mesh model of a real world scene may provide an accurate yet practical representation of three dimensional information of the scene which may e.g be used to synthesize images for different view poses.

A 3D mesh may specifically be a three dimensional mesh wherein each vertex is associated with (has) a three dimensional position. Each vertex may specifically be represented by at least a three dimensional spatial position x, y, z. Each vertex of a mesh may further be linked with a position in the corresponding texture map/ image. For example, for each vertex, a position u,v in the texture map/ image corresponding to the spatial position x, y, z may be stored.

A 3D mesh may include information relating to the depths of the represented objects but is not limited thereto (e.g. as described, vertices may be represented by three dimensional coordinates rather than merely by a depth coordinate).

Depth may e.g. be represented by a disparity, e.g. a depth map may be an indication of a disparity map. A higher depth value indicates a further distance from a reference viewpoint, and thus indicates a depth further away from the viewpoint and further towards the background.

Many 3D image (including video) processing algorithms and processes are based on the use of triangle meshes as this may provide high computational efficiency in many embodiments. Meshes providing three-dimensional information together with an associated texture map is widely used in many graphic processing systems, such as specifically in computer graphics.

Mesh image based graphics processing and image generation is ubiquitous and most computer graphics cards, mobile phones, game consoles etc. are based on or support one or more mesh based graphics handling approaches. A number of standards have been developed providing cross-platform application programming interfaces that can be used by applications to efficiently utilize e.g. dedicated hardware based graphics processing. Such approaches include the well-known OpenGL or DirectX application programming interfaces that are widely supported, including by highly specialized and optimized hardware.

Mesh image based processing is very suitable for flexibly modifying view directions when rendering the scene and is particularly suitable for scenarios in which the viewpoint is not restricted to movements in a strict horizontal line but rather a free movement of the viewpoint is desired. An efficient way to generate a new viewpoint is to transform the meshes originating from the different viewpoints to a single world coordinate system and then perform a perspective projection onto a new camera plane. These steps can be done very efficiently using standard optimized graphics hardware, such as hardware based on the OpenGL standard. However, in order to optimize quality and provide additional information for areas which are being de-occluded by the viewpoint transformations, the generation of a rendering image from a new viewpoint is preferably based on meshes that are highly accurate.

In order to provide such accuracy, 3D meshes may in many scenarios be enhanced to include more primitives, and in particular primitives may often by divided into a number of smaller primitives. Such a process of division of primitives may also be referred to as tessellation.

Accordingly, the synthesis apparatus comprises a divider 205 (or tessellator) which is arranged to generate a modified three dimensional mesh by dividing primitives of the plurality of primitives of the initial 3D mesh.

However, whereas generating a 3D mesh with a larger (and ideally very large) number of potentially quite small primitives may provide an improved performance for many processes, such as specifically improved image synthesis, it also has a number of disadvantages. In particular, a larger (in terms of more primitives) 3D mesh will typically tend to substantially increase the computational resource requirements for the processing and e.g. image synthesis. This increased computational resource requirement may for example often prevent real time applications to be generated to run effectively on low resource devices such as many smartphones or other mobile devices.

Accordingly, it is desirable to carefully adapt the tessellation/ division to generate a suitable number of primitives. However, the sensitivity to 3D mesh inaccuracies tend to vary as a function of many parameters so the optimum division/ tessellation is difficult to determine. Further, the optimum or preferred tessellation may be dependent on specifics of the client device and/or usage.

It may accordingly be advantageous to use dynamic or adaptive tessellation to subdivide a mesh into finer segments in response to a 'level-of-detail' (LoD) requirement. For example, when an object is depicted nearby, a finer mesh is used to expose a more detailed view on the object. For objects further away, a coarser mesh is used as the details are less observable. Using this mechanism, computational efficiency can be improved. Such an approach can e.g. be used to dynamically adapt to using a coarser or finer mesh to align with the geometric shape defined in the depth map.

In the synthesis apparatus of FIG. 2, the mesh generator 203 may generate an initial coarse (low resolution/ few primitives) 3D mesh. For example, using a fixed grid and covering the entire depth map/image, an initial coarse 3D mesh may be generated by generating vertices by subsampling the depth map (e.g. generating a vertex for every 4^{th} or 8^{th} etc. depth sample). The divider 205 (which may also be referred to as a tessellator) may subsequently divide some or all of the primitives of the coarse 3D mesh to generate a modified finer (high resolution/ more primitives) 3D mesh. The divider 205 may specifically perform an adaptive division/ tessellation where different divisions may be applied in different parts of the mesh and to different primitives.

The divider 205 may for example for each primitive, decide how to subdivide the primitive into smaller segments/ divisions. This decision may be based on a number of parameters in different embodiments, including based on local depth values. For example, if the depth gradient or difference between any two vertices of a primitive exceeds a given threshold, the primitive may be subdivided, e.g. by adding another vertex along the edge connecting the two vertices or by adding one or more vertices internally in the primitive. Such an approach may for example be iterated to potentially subdivide the newly generated primitives.

However, the divider 205 in synthesis apparatus of FIG. 2 is also arranged to perform the division/ tessellation in dependence on mesh division cues that are received as part of the data signal.

In particular, the data signal includes mesh division cues that are indicative of properties of mesh primitive divisions for different parts of the scene, i.e. it may be indicative of how primitives of the mesh should be divided in different parts of the scene. The mesh division cues (which may also be referred to as tessellation cues) may for example provide information on a sensitivity of different parts of the scene to the number/ and or size of the primitives. The mesh division cues may for example indicate that a given part of the scene should be divided into more and smaller primitives than other parts of the scene.

The mesh division cues may thus provide information on how primitives of different parts of the scene should be divided into smaller primitives. The different parts of a scene may directly correspond to different parts of a depth, mesh, or image representing the scene. Thus, the mesh division cues may thus provide information on how primitives of different parts for different parts of the depth map/ mesh/ image of the scene should be divided into smaller primitives.

In some embodiments, mesh division cues may directly indicate a specific number of divisions that should be applied to the primitive(s) for which the mesh division cues are provided. The number of divisions may for example be provided as the number of smaller primitives that the primitive should be divided into, the number of additional vertices that should be introduced to the inside of the primitive, or the number of new vertices that should be added to edges of the primitive.

In some embodiments, the mesh division cues may for example merely provide an indication of a parameter or relationship (e.g. function) that should be considered when performing the division/ tessellation.

For example, in some embodiments, the number of vertices to add to an edge of a primitive to divide this into smaller primitives may be determined as a function of the depth difference between the two vertices forming the edge. As a low complexity example, a new vertex may be added to an edge midway between two vertices in order to split a primitive into two smaller primitives if the depth difference exceeds a threshold. The mesh division cues may in such an example provide the threshold to be used with this varying between different parts of the scene and thus it is different for at least some primitives.

In some embodiments, more complex relationships may be provided. For example, in some embodiments, the mesh division cues may provide a specific function which e.g. as a function of the positions (or e.g. only depth) of the vertices of the primitive provides a number of subdivisions and/or vertices that should be added to divide the primitive.

In some embodiments, the division may be performed using one of a number of predetermined functions and the mesh division cues may indicate which of these should be applied.

In some embodiments, the mesh division cues may include a parameter value that can be included in a function being evaluated to determine the number of subdivisions to apply to a primitive.

In many embodiments, the mesh division cues may be indicative of a division/ tessellation degree or level for different parts of the scene.

The divider 205 may receive the mesh division cues from the first receiver 201 and proceed to perform the division/ tessellation in accordance with the provided cues. The divider 205 may in some embodiments be arranged to repeat/ iterate the division/ tessellation process such that primitives resulting from a division may be further subdivided in subsequent iterations. In such cases, mesh division cues provided for a primitive may also be applied to the primitives that result from dividing this primitive (e.g. the same function for determining additional vertices dependent on the depth values may be applied).

In some embodiments, a mesh division cue may be provided for each primitive of the first 3D mesh. However, in many embodiments, at least some of the mesh division cues may be common for a plurality of primitives, such as all primitives within a given region of the scene/ depth map/ image.

The use of mesh division cues rather than merely performing a straight division/ tessellation may be highly advantageous in many embodiments. It may in many embodiments allow an improved 3D mesh to be generated that more accurately reflects the scene and which may e.g. allow improved image synthesis. Typically, the generator side will have access to more information about the scene thereby allowing more accurate and better decisions on how to tessellate. Further, typically it may have more computational resource available, or the process may be performed in non-real time. The provision of data guiding the divider 205 in the synthesizer apparatus may allow a more accurate and advantageous tessellation. Further, it may often result in reduced complexity at the synthesizer apparatus and/or reduced resource usage as it may allow fewer subdivisions to achieve the same quality and/or may allow an easier determination of how to divide/tessellate.

In many scenarios, a reduced data rate may be achieved. For example, although the mesh division cues are encoded in the data signal, this can often be done highly efficiently. The increased data overhead is typically more than compensated by it being possible to provide less detailed depth/ spatial information thereby allowing a substantial decrease in the spatial data.

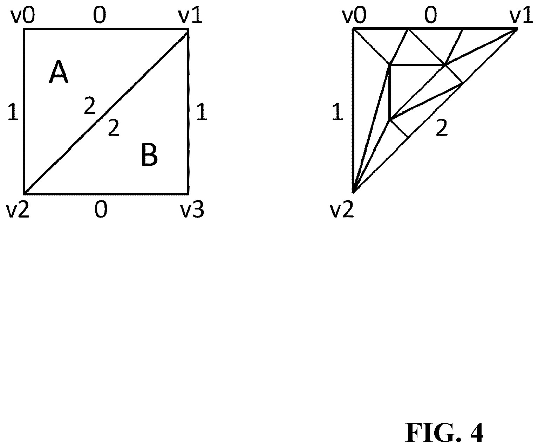

FIG. 4 illustrates an example of how this may result in a primitive being divided/ tessellated into a plurality of primitives. FIG. 4 shows two primitives A and B which specifically are triangles that are formed by vertices v0 through v3. In the example, the local edge indices [0,1,2] are aligned such that for neighboring primitives, the common edge has the same local index. For example, triangles A and B share the edge 2.

In the example, the divider 205 is arranged to determine a subdivision factor per edge for the input triangle. The decision to do so per edge ensures that neighboring triangles have the same amount of tessellation for the shared edge. Otherwise, there could in some cases by a risk of discontinuities arising in the mesh. The decision of the subdivision factor is made by the divider on input depth values and the received mesh division cues.

As a specific example, when deciding on the tessellation for triangle A in FIG. 4, a depth map comprising depth values may be sampled for pixel locations that correspond to vertices [v0,v1,v2]. When the differences in depth values between v0 to v1 is sufficiently large, and the difference between v0 and v2 is small, it could be decided to use a tessellation as shown in the second example of FIG. 4. The threshold for determining whether a depth difference is small or large may be determined by mesh division cues received as part of the data signal.

This approach may ensure that the size of triangles that cross depth variations are small. However, when triangle A is e.g. part of a flat floor surface, it could be that differences in depth values are large while there is no need to subdivide the triangle. To handle such a situation, depth values in a larger neighborhood may be taken into account. For example, it may be computed whether triangle A lies in the same plane as its neighboring triangles. When that is the case, for example in a flat surface, there is no need to subdivide. In another example, it could be decided not to subdivide the triangle, while a more detailed analysis on the fine geometric shape could result in another decision. However, rather than having to perform a detailed and potentially inaccurate analysis to determine the exact nature of the more general area and whether it indeed corresponds to such a situation, the mesh division cues may instead be used to reflect such differences. For example, for triangles that are indeed part of such a larger flat area, the mesh division cues may simply direct that a larger threshold for division should be applied than otherwise.

FIG. 4 shows a specific example where edges 0 and 2 of triangle A are subdivided into three segments whereas edge 1 is not divided. In addition, three vertices are included internally in triangle A. These vertices are determined as a function of the edge subdivisions.

In some embodiments, the mesh division cues may provide an indication of how the division/ tessellation should depend on other parameters than depth parameters. For example, the mesh division cue may be indicative of how the division should depend on the following parameters:
A color property of the image: For example, the mesh division cues may indicate that the divider 205 should subdivide based on a) luminance, b) proximity to a color value. For instance, by providing a mapping of value a) or b) to a tessellation cue; whereby the mapping could be as simple as a threshold or a scaling factor.

A texture property of the image: For example, the mesh division cues may indicate that the divider 205 should subdivide based on variation in the color values of nearby vertices; whereby the mapping could be as simple as a threshold or a scaling factor.

A transparency property of the image: For example, the mesh division cues may indicate that the divider 205 should subdivide only if transparency is above or below a threshold value; or subdivide if the difference in local transparency values exceeds a threshold.

A saliency property of the image: For example, the mesh division cues may indicate that the divider 205 should use a different number of subdivisions for regions in a certain saliency range.

The modified 3D mesh may be used for different purposes in different applications and embodiments. For example, in some embodiments, the modified 3D mesh may e.g. be used to detect collisions between virtual objects and objects of the scene. As another example, the modified 3D mesh may be used to determine view ranges and directions in the scene. As other examples, the mesh may be used for video analytics, 3D printing, computational fluid dynamics and other physical simulations, coding to another data representation (e.g. flattening) whereby the bit rate depends on the tessellation, e.g. when "baking" geometry for raytracing in a render farm.

However, in the most embodiments, the modified 3D mesh is used for view synthesis and accordingly the synthesis apparatus of FIG. 2 comprises a view synthesizer 207 which is arranged to generate view images from the modified 3D mesh and the image data. The view synthesizer 207 is specifically arranged to generate view images corresponding to the view/ view port of the scene from different view poses 209 (that may e.g. be received from an external headset tracking user movement).

It will be appreciated that many different approaches, algorithms, and techniques are known from synthesizing image data from three dimensional data including from captured video data and from a three-dimensional mesh model, and that any suitable approach and algorithm may be used without detracting from the invention.

Examples of appropriate view synthesis algorithms may for example be found in:

```
                 "A review on image-based rendering"
                Yuan HANG, Guo-Ping ANG
                Virtual Reality & Intelligent Hardware,
Volume 1, Issue 1, February 2019, Pages 39-54
                https://doi.org/10.3724/SP.J.2096-5796.2018.0004
                or
                 "A Review of Image-Based Rendering Techniques"
                 Shum; Kang
                Proceedings of SPIE - The International
Society for Optical Engineering 4067:2-13, May
 2000
                DOI:10.1117/12.386541
                or e.g. in the Wikipedia article on 3D rendering:
                https://en.wikipedia.org/wiki/3D_rendering
```

FIG. 3 illustrates an example of a signal generator apparatus which may generate the data signal provided to the synthesizer apparatus of FIG. 2. The signal generator apparatus comprises a first receiver 301 which is arranged to receive image data representing the scene. The image data may for example be one or more captured images or a real-life scene, may for example be a texture map generated together with a 3D mesh based on e.g. a model of the scene, or may be any other image data representing all or parts of a scene.

The signal generator apparatus further comprises a second receiver 303 which is arranged to receive spatial data indicative of spatial properties of the scene. The second receiver 303 may specifically receive depth maps captured or derived from multi-view images provided to the first receiver 301. In other embodiments, the second receiver 303 may for example receive a 3D mesh representing a 3D model or capture of the scene.

It will be appreciated that any suitable visual and spatial data may be received by the first and second receivers 301, 303 without detracting from the described principles.

The signal generator apparatus further comprises a cue processor 305 arranged to provide mesh division cues indicative of properties of mesh primitive divisions for different parts of the scene. The cue processor 305 may accordingly provide mesh division cues such as those previously described.

In some embodiments, the mesh division cues may for example be manually entered via a user input thereby allowing e.g. a content creator to also provide assistance to, and potential control over, the subsequent tessellation performed at the (typically many) client devices/ synthesizer apparatuses.

An operator may for example use a touch sensitive display presenting an image of the scene to indicate different areas to which he may then allocate a sensitivity (to the size of the primitives). For example, the user may encircle a floor area and indicate that this has low sensitivity, indicate some irregular foreground objects and indicate that they have a high sensitivity, indicate some smooth midground objects and indicate that they have medium sensitivity etc. Each sensitivity category/ value may then be linked to a specific mesh division cue which may be provided by the cue processor 305 for the parts of the scene that have been assigned the corresponding sensitivity category/ value. For example, a mesh division cue indicating that each primitive should be divided into four sub-primitives is provided for areas indicated to have very high sensitivity, a mesh division cue indicating that each primitive should be divided into two sub-primitives is provided for areas indicated to have medium sensitivity, and a mesh division cue indicating that each primitive should not be divided is provided for areas indicated to have low sensitivity. In many embodiments more complex indications may be provided, such as a relationship between depth properties for the primitives and a number of subdivisions.

In many embodiments, the generation of the mesh division cues may be automatic. For example, it may be desired/ required that a coarse mesh is transmitted/ included in the data signal in order to maintain a low data rate or to allow low resource processing in some devices. In many embodiments, a fine 3D mesh cannot be easily transmitted, and not all devices are capable of rendering enough primitives. Hence, creating a coarse mesh from a fine one and transmitting only the coarse 3D mesh may be advantageous. Suitably capable devices may then perform the described tessellation to generate a finer mesh as driven by the mesh division cues.

Further, the cue processor 305 may proceed to compare the original fine 3D mesh to the corresponding generated coarse 3D mesh that is transmitted in the data signal. The cue processor 305 may proceed to derive mesh division cues (for all or select regions) based on the comparison, such as e.g. providing cues to provide a more detailed division for regions where the differences between the coarse and fine meshes exceed a given threshold.

As another example, the cue processor 305 may reproject meshes of different camera viewpoints, test their correspondence, and derive the cues from that such that a higher subdivision is recommended for regions with lower correspondence.

The first receiver 301, the second receiver 303, and the cue processor 305 are coupled to a data stream generator 307 which is arranged to generate the data signal. The data stream generator 307 includes encoded data representing the image data, the spatial data, and the mesh division cues in the data signal. It will be appreciated that any suitable approach for encoding images, spatial data, or values representing the mesh division cues may be used and that many different approaches will be known to the skilled person and are accordingly not further described herein.

An advantage of the described approach is that it may allow a more extended analysis on the geometric shapes to be carried-out at the generating/encoder side where there are typically less restrictions on computational complexity. This may be the case simply because there is no real-time requirement or because there are more computational resources available at the generating/encoder side. Also, in for example broadcasting scenarios, the encoder/ generator side may provide data to many clients and thus provide a shared resource for the many devices. Processing at the encoder/ generator side may thus be much more efficient than having the individual devices perform the processing.

In some embodiments, the encoder may specifically be arranged to encode the spatial data and the mesh division cues using a color image encoding format. Thus, the data may be encoded such that it appears as if it was a color image. This may for example facilitate processing and routing of the data as existing, legacy equipment capable of handling such color image encoding formats can directly handle the data signal generated by the signal generator apparatus.

The signal generator apparatus may specifically be arranged to generate the data signal to use a luminance and chrominance color image encoding format to encode the spatial data and the mesh division cues. The data generator 307 may be arranged to encode the spatial data in the luminance channel of the color image encoding and to encode the mesh division cues in one or more chrominance channels of the color image encoding. The color image encoding may specifically be YUV coding.

The mesh division cues may typically be encoded as separate meta-data or may e.g. be encoded in a YUV signal. For example when depth-values are encoded in the luminance (Y) signal, the mesh division cues can be encoded in the chrominance signal (U,V).

For coding efficiency, it may be preferred that the codes that represent the mesh division cues are spatially and temporally smooth. Unused pixel positions can be interpolated for this purpose. For robustness, it is typically preferred that the codes are redundant to coding noise. For this purpose, there may be a gain/ scale factor introduced between the cue and the code it is represented by.

A simple coding example is to directly write a division value for the two edges of a vertex into the U and V values for a pixel-location that corresponds to this vertex. For coding efficiency, it may be chosen to subsample the coded mesh division cues more compactly, thereby loosing alignment between depth-values and mesh division cues.

In some embodiments, mesh division cues may be provided for all parts of the scene, and specifically for all parts of a depth map/ image comprised in the data signal representing the scene. However, in other embodiments, mesh division cues may only be provided for a part of the scene. For example, the cue processor 305 may be arranged to specifically identify parts of the scene for which the sensitivity to the size of primitives is considered to be very high. For example, it may identify areas of a depth map that have particularly high depth steps or depth variations. The cue processor 305 may proceed to identify such areas and provide mesh division cues for these specific areas. This data may then be encoded and included in the data signal by the data generator 307. However, for other parts of the scene (depth map) no mesh division cues may be generated or included in the data signal.

In such cases, the synthesizer apparatus may accordingly only be provided with mesh division cues for part of the scene/ image/ depth map. The divider may accordingly proceed to perform the division in accordance with the mesh division cues for these parts. However, of other parts of the scene/ image/ depth map it may proceed to use a nominal/ predetermined/ default approach for dividing the primitives to perform tessellation. Indeed, in many embodiments, the divider 205 may be arranged to not divide any primitives for regions for which no mesh division cues are provided. In other embodiments, a default division criterion may be used, such as a default number of divisions dependent on the depth variations for a primitive. Such an approach may typically provide an efficient and advantageous tessellation while allowing a reduced data rate.

In many embodiments, a single indication of a nominal division criterion to use may be provided in the data signal itself. For example, in some scenarios, it may be that simply using local depth-values in accordance with a nominal division criterion gives an advantageous result for a large part of the image/ scene. A default mesh division cue (for example, the U and V values both have a neutral value) may then instruct the synthesizer apparatus to rely fully on the local depth-value analysis and not include any specific mesh division cues. For specific parts of the image (having non-neutral U,V values), encoded mesh division cues may be used to indicate specific division properties but these will typically be relatively small in comparison to the entire images. This strategy yields coding efficiency as most of the UV plane will be neutrally coded. It may come at a cost of a small complexity increase at the synthesizer apparatus side.

In many embodiments, the synthesizer apparatus may comprise a graphics pipeline which is arranged to synthesize view images for different view poses from the received data signal. Such graphics pipelines are used in many practical applications and are widespread in the field of computer graphics. A graphics pipeline is generally used to carry out the efficient view-synthesis.

The described approach is highly suitable to be implemented as part of a graphics pipeline thereby providing a very efficient and high performance operation. In particular, the divider 205 may be used as part of the tessellation stage of a graphics pipeline, or equivalently the tessellator stage of a graphics pipeline may be implemented in line with the provided description. Thus, the tessellator stage of a graphics pipeline may generate a modified 3D mesh as described.

The graphics pipeline may specifically be an OpenGL, Vulkan, WebGL, Metal or DirectX graphics pipeline.

In some embodiments, at least some cues of the mesh division cues provide indications of properties of mesh primitive divisions in at least two different directions/ dimensions. One or more of the mesh division cues may indicate different division properties in two (or possibly more) directions. The directions may typically be orthogonal to each other. In some embodiments, the directions may be predetermined, such as one being a horizontal direction and the other being a vertical direction of a depth map or image which is associated with the mesh division cues. In other embodiments, the directions may be dynamically determined such as one direction being along a constant depth (iso-depth) curve in a depth map and the other direction may be orthogonal to this.

In some examples, the mesh division cues may not be related to any predetermined directions but may be related to directions that may be determined at the synthesizer apparatus. For example, in some embodiments, the mesh division cues may indicate a division property along a direction of maximum depth gradient and a division property along a direction of minimum depth gradient. However, the depth gradients may not be predetermined but rather may be determined by the synthesizer apparatus by evaluating the spatial data. Thus, such mesh division cues may be relatively static and common to a plurality of primitives (or to multiple frames) but the application will vary dynamically depending on the analyzed depth gradients.

Multidimensional mesh division cues may specifically provide an indication of a degree of anisotropy of division/ tessellation in the two different directions. The mesh division cues may for example include a two component value (e.g. encoded in respectively the U and V components of an image encoding) where the first component value indicates the division property along the first direction and the second component value indicates the division property along the second direction.

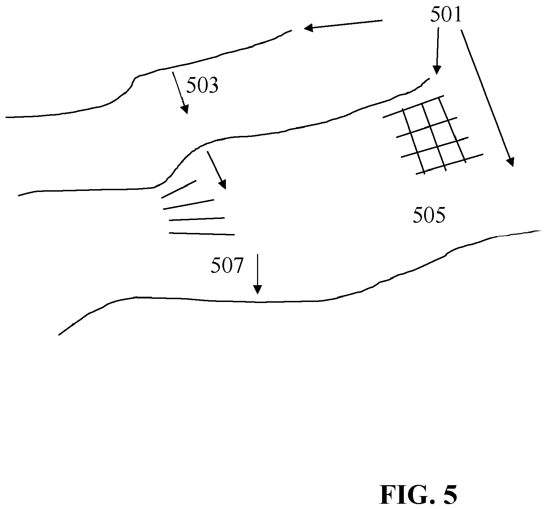

As a specific example, in some embodiments, two-dimensional mesh division cues may be provided for e.g. a primary and secondary tessellation direction which are determined by the synthesizer apparatus based on an estimated depth gradient direction. FIG. 5 illustrates an example of the application of such an approach to a depth map in which a number of iso-depth lines 501 are detected and the two directions are determined as in line with the iso-depth lines and orthogonal directions thereto (a normal 503 to the iso-depth lines). In the example, an area 505 is shown in which the tessellation is the same in both directions and another area 507 is shown in which the tessellation is only performed in one direction (fully anisotropic tessellation).

Alternatively, in many embodiments, the synthesizer apparatus may determine the highest depth gradient and use this as one direction and with the orthogonal direction being the second direction. The depth gradient or normal vector may provide a direction of maximum depth change. This may locally be the primary tessellation direction, and the orthogonal direction may be the secondary tessellation direction.

As a specific example, the synthesizer apparatus may derive depth gradients or normal vectors. The normal vector is a direction vector in scene space (probably in the reference frame of the camera), while the depth gradient is the rate of change of (coded or scene unit) depth values in the depth map. The concepts are closely related because view parameters (intrinsics and depth quantization) allow for the conversion between the two concepts.

The depth gradient may be a map of the numerically estimated spatial derivatives in horizontal and vertical direction of the depth map. Due to coding and quantization, these numerical estimates may not always be reliable, but this is typically acceptable in this context because even if the mesh is wrongly tessellated, while not optimal, it can be rendered.

The depth gradient may be implemented as a shader that transforms the depth map to produce a new map of equal size and with two channels, one for each partial derivative. The tessellation shader can then fetch a depth gradient value from this map. If the depth gradient is too noisy, the output can be mipmapped and the value at two or more mipmap levels can be combined to perform some filtering on the depth gradient.

Because only the in-plane direction is needed (one freedom) the algorithm can be simplified to avoid calculating the entire depth gradient or entire normal vector.

Multidimensional mesh division cues may for example be encoded using the chrominance channels of a color image encoding scheme. In one exemplary coding scheme, the depth may be transmitted in the Y plane/ channel, the transmitted U plane/ channel may indicate the amount of tessellation in the primary direction, and the transmitted V plane/ channel may indicate the amount of tessellation in the secondary direction.

In another coding scheme, the depth may be transmitted in the Y plane/ channel, the transmitted U plane/ channel may indicate the amount of tessellation, and the transmitted V plane/ channel may indicate the anisotropy of the tessellation. When low, the tessellation is isotropic meaning that the cue is to make a similar number of subdivisions in each spatial direction. When high, the tessellation is performed mainly in the primary direction.

In both coding schemes the quantization of the U and V plane can be independently optimized, and the U plane is expected to be more important than the V plane. When the V plane is entirely omitted, then for the first coding scheme, the synthesizer apparatus could set V = cU for some constant c < 1, such as c = 1/2, to have less tessellation in the secondary direction. For the second coding scheme, the client can use a central value (partial anisotropy) which would be on average a good solution.

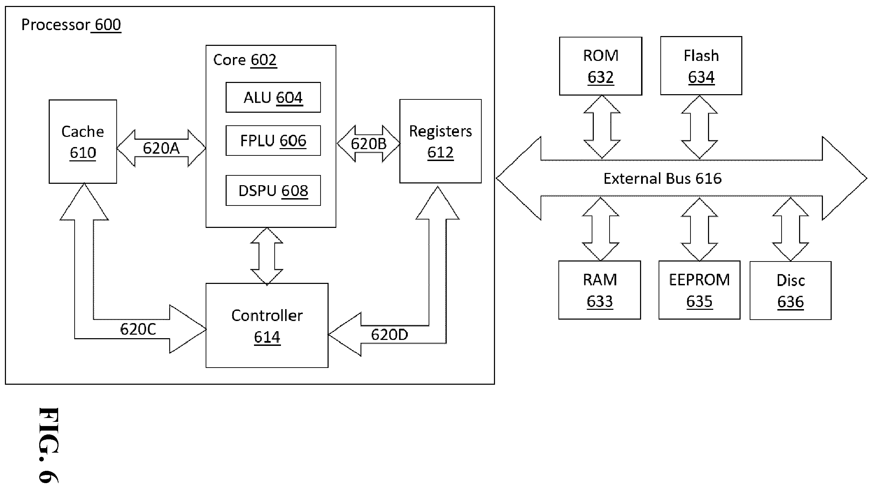

FIG. 6 is a block diagram illustrating an example processor 600 according to embodiments of the disclosure. Processor 600 may be used to implement one or more processors implementing an apparatus as previously described or elements thereof (including in particular the synthesizer apparatus and/or the signal generator apparatus). Processor 600 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 600 may include one or more cores 602. The core 602 may include one or more Arithmetic Logic Units (ALU) 604. In some embodiments, the core 602 may include a Floating Point Logic Unit (FPLU) 606 and/or a Digital Signal Processing Unit (DSPU) 608 in addition to or instead of the ALU 604.

The processor 600 may include one or more registers 312 communicatively coupled to the core 602. The registers 612 may be implemented using dedicated logic gate circuits (e.g., flip-flops) and/or any memory technology. In some embodiments the registers 612 may be implemented using static memory. The register may provide data, instructions and addresses to the core 602.

In some embodiments, processor 600 may include one or more levels of cache memory 610 communicatively coupled to the core 602. The cache memory 610 may provide computer-readable instructions to the core 602 for execution. The cache memory 610 may provide data for processing by the core 602. In some embodiments, the computer-readable instructions may have been provided to the cache memory 610 by a local memory, for example, local memory attached to the external bus 616. The cache memory 610 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 600 may include a controller 614, which may control input to the processor 600 from other processors and/or components included in a system and/or outputs from the processor 600 to other processors and/or components included in the system. Controller 614 may control the data paths in the ALU 604, FPLU 606 and/or DSPU 608. Controller 614 may be implemented as one or more state machines, data paths and/or dedicated control logic. The gates of controller 614 may be implemented as standalone gates, FPGA, ASIC or any other suitable technology.

The registers 612 and the cache 610 may communicate with controller 614 and core 602 via internal connections 620A, 620B, 620C and 620D. Internal connections may be implemented as a bus, multiplexer, crossbar switch, and/or any other suitable connection technology.

Inputs and outputs for the processor 600 may be provided via a bus 616, which may include one or more conductive lines. The bus 616 may be communicatively coupled to one or more components of processor 600, for example the controller 614, cache 610, and/or register 612. The bus 616 may be coupled to one or more components of the system.

The bus 616 may be coupled to one or more external memories. The external memories may include Read Only Memory (ROM) 632. ROM 632 may be a masked ROM, Electronically Programmable Read Only Memory (EPROM) or any other suitable technology. The external memory may include Random Access Memory (RAM) 633. RAM 633 may be a static RAM, battery backed up static RAM, Dynamic RAM (DRAM) or any other suitable technology. The external memory may include Electrically Erasable Programmable Read Only Memory (EEPROM) 635. The external memory may include Flash memory 634. The External memory may include a magnetic storage device such as disc 636. In some embodiments, the external memories may be included in a system.

The approach may also in many cases facilitate implementation and/or reduce complexity and/or reduce computational burden. For example, reduced encoding/ decoding of video capture can be achieved, facilitated rendering may be achieved (rendering based on a 3D mesh model is typically less complex and computationally intensive than rendering of captured video).

The invention can be implemented in any suitable form including hardware, software, firmware, or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

In the application any reference to one of the terms "in response to", "based on", "in dependence on", and "as a function of' should be considered to be a reference to the term "in response to /based on/ in dependence on/ as a function of'. Any of the terms should be considered to be a disclosure of any of the other terms and the use of only a single term should be considered a short-hand notation that includes the other alternatives/ terms.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. An apparatus for generating a mesh representation for a scene, the apparatus comprises:
a receiver (201) arranged to receive a data signal comprising:
image data representing the scene,
spatial data indicative of spatial properties of the scene, and
mesh division cues indicative of properties of mesh primitive divisions for different parts of the scene;
a mesh generator (203) arranged to provide a first three dimensional mesh for the scene, the first three dimensional mesh being formed by a plurality of primitives having vertices interconnected by edges, positions of vertices of the plurality of primitives being dependent on the spatial data; and
a divider (205) arranged to generate a modified three dimensional mesh by dividing primitives of the plurality of primitives, the division being dependent on the mesh division cues.

2. The apparatus of claim 1 wherein at least one cue of the mesh division cues indicates a number of divisions of at least one of a primitive and an edge of a primitive of the plurality of primitives.

3. The apparatus of any previous claim wherein at least one cue of the mesh division cues indicates a dependency of a number of divisions of at least one of a primitive and an edge of a primitive on a depth property of the primitive.

4. The apparatus of any previous claim wherein at least one cue of the mesh division cues indicates a dependency of a number of divisions of an edge of a primitive of the plurality of primitives on at least one parameter from the group of:
a color property of the image;
a texture property of the image;
a transparency property of the image; and
a saliency property of the image.

5. The apparatus of any previous claim wherein the spatial data comprises a depth map for the scene.

6. The apparatus of claim 5 wherein the spatial data is encoded in a luminance channel of a color image encoding and the mesh division cues are comprised in at least one chrominance channel of the color image encoding.

7. The apparatus of any previous claim wherein the spatial data comprises data describing a three dimensional mesh.

8. The apparatus of any previous claim comprising a graphics pipeline arranged to synthesize images from different view positions from the received data stream, the graphics pipeline being arranged to synthesize the images using the modified three dimensional mesh, and wherein the divider (205) is part of the graphics pipeline.

9. The apparatus of any previous claim wherein at least some cues of the mesh division cues provide indications of properties of mesh primitive divisions in at least two different directions.

10. The apparatus of claim 9 wherein at least some cues of the mesh division cues provide indications of a degree of anisotropy of division in the two different directions.

11. The apparatus of any previous claim wherein mesh division cues are only provided for a part of the scene and the divider (205) is arranged to generate the modified three dimensional mesh by using a nominal subdivision property for primitives of the plurality of primitives for which no mesh division cues are provided.

12. An apparatus for generating a data signal, the apparatus comprising:
a receiver (301) arranged to receive image data representing a scene;
a receiver (303) arranged to receive spatial data indicative of spatial properties of the scene; and
a processor (305) arranged to provide mesh division cues indicative of properties of mesh primitive divisions for different parts of the scene; and
a data stream generator (307) arranged to generate the data signal to include encoded data representing the image data, the spatial data, and the mesh division cues.

13. A method of generating a mesh representation for a scene, the method comprising:
receiving a data stream comprising:
image data representing the scene,
spatial data indicative of spatial properties of the scene, and
mesh division cues indicative of properties of mesh primitive divisions for different parts of the scene;
providing a first three dimensional mesh for the image, the first three dimensional mesh being formed by a plurality of primitives having vertices interconnected by edges, positions of vertices of the plurality of primitives being dependent on the spatial data; and
generating a modified three dimensional mesh by dividing primitives of the plurality of primitives, the division being dependent on the mesh division cues.

14. A method of generating a data signal, the method comprising:
receiving image data representing a scene;
receiving spatial data indicative of spatial properties of the scene; and
providing mesh division cues indicative of properties of mesh primitive divisions for different parts of the scene; and
generating the data signal to include encoded data representing the image data, the spatial data, and the mesh division cues.

15. A computer program product comprising computer program code means adapted to perform all the steps of claims 13 or 14 when said program is run on a computer.

16. A data signal comprising:
image data representing a scene;
spatial data indicative of spatial properties of the scene; and
data representing mesh division cues indicative of properties of mesh primitive divisions for different parts of the scene.
